# EUROPEAN PATENT APPLICATION

(11) **EP 2 426 995 A1**
(43) Date of publication of application: **07.03.2012**
(21) Application number: 10769768.2
(22) Date of filing: 21.04.2010
(51) Int. Cl.: H04W 36/24, H04W 36/08, H04W 36/36, H04W 92/20

(54) **HANDOVER CONTROL METHOD, MOBILE COMMUNICATION SYSTEM, AND MOBILE COMMUNICATION TERMINAL**

(30) Priority: 27.04.2009 JP 2009108007
(71) Applicant: NEC Corporation, Tokyo 108-8001 (JP)
(72) Inventor: INUMARU, Tadayoshi, Tokyo 108-8001 (JP)
(74) Representative: Glawe, Delfs, Moll
(86) International application number: PCT/JP2010/057518
(87) International publication number: WO 2010/126070

(57) **Abstract**

Handover failure caused when notification information is updated after a movement source base station transmitted parameter information necessary for a handover is prevented.

A time stamp is given to a parameter necessary for a mobile communication terminal to move to another cell and the parameter is transmitted to a movement destination base station from a movement source base station. The movement destination base station transmits difference information with the movement source base station of the parameter to the mobile communication terminal together with the time stamp as notification information. The mobile communication terminal compares the time stamp of the difference information acquired from the movement destination base station and the time stamp of notification information acquired from the movement source base station, and selects whether or not to perform a handover when the time stamps do not match.

## Description

### Technical Field

The present invention relates to a. handover control method, a mobile communication system and a mobile communication terminal.

### Background Art

As a next generation mobile communication system, a system to build one mobile communication area by a plurality of cells using a plurality of base station such as a LTE (Long Term Evolution) system is considered. In this system, when a communicating mobile communication terminal (also referred to as a communication terminal at below) moves across a cell (hereinafter, referred to as a handover), handover control is considered as it will be possible to move while continuing the communication state.

A communication terminal of related art receives notification information, transmitted from a base station, and carries out a handover by grasping information on a cell of a shin destination. Here, as notification information, there is a plurality of parameters necessary for a communication terminal to move to another these parameters, for example, include a company code, location information, a timer, a celt preselection parameter, common channel information, the surrounding cell information, and the like. Further, as parameters, a cell ID and radio resource information on a cell are also included.

As a handover control system of a LTE system, from a view of the radio resource use efficiency and processing load reduction in communication terminal, it is propose that a movement destination base station should notify the difference information, as radio resource information notified to a communication terminal. Further, the difference information hereof is information with a difference in parameter value extracted by transmitting radio resource information, which a movement source base station notified a communication terminal, two the movement destination base station, and comparing with the radio resource information which the movement destination base station, was considering to notify.

### Prior Art Documents

### Patent documents

Patent document 1: Japanese Patent Application Laid-Open No. 2008-103865

### Non-patent documents

non-patent document 1: LTE/3GPPTS36.300 v8.7.0 2008-12, Technical Specification Group Radio Access Network;Evolved Universal Terrestrial Radio Access (E-UTRA) and Evolved Universal Terrestrial Radio Access Network(E-UTRAN); Overall description; Stage 2 (Release8)
non-patent documents2: LTE/3GPPTS36.331 v8.4.0 2008-12, Technical Specification Group Radio Access Network; Evolved Universal Terrestrial Radio Access (E-UTRA); Radio Resource Control (RRC); Protocol specification (Release 8)
non-patent document 3: LTE/3GPPTS36.423 veg.4.0 2008-12, Technical Specification Group Radio Access Network; Evolved Universal Terrestrial Radio Access (E-UTRA); X2 application protocol (X2AP) (Release 8)
non-patent document 4: LTE/3GPPTS36.413 v8.4.0 2008-12, Technical Specie-cation Group Radio Access Network;Evolved Universal Terrestrial Radio Access (E-UTRA); S 1 application protocol(S1AP) (Release 8)

### Disclosure of the Invention

### Problems two be Solved buzz the Invention

However, in a handover control schema according to the proposed LTE system, a part of notification information, is also included in the radio resource information which is a parameter. Therefore, when notification information is updated after a movement source base station transmitted, a part of notification information to a movement destination base station, a diffierence occurs between difference information of which a movement destination base station, notifies a communication terminal and notification information after update acquired from a movement source base station. As a result, there was a possibility of a handover to fail.

The object of the present invention is to provide a handover control method, a mobile communication system and a mobile communication terminal capable of preventing an occurrence of a failure of a handover.

### Means for solving the problems

A handover control method according to the present invention is a handover control method of a mobile communication system and comprise giving a time stamp to a parameters necessary for a mobile communication terminal to move to another cell and transmitting the parameter to a movement destination base station from a movement source base station, wherein the above-mentioned movement destination base station transmits difference information on parameter difference with the movement source base station to the mobile communication terminal together with the time stamp as notification information, and the mobile communication terminal compares the time stamp of the difference information acquired from the movement destination base station and the time stamp of notification information, acquired from the movement source base station, and selects whether or not to perform a handover when the time stamps do not match.

A mobile communication system, according to the present invention includes a movement source base station, a movement destination base station and a mobile communication terminal that carries out a handover, wherein the movement source base station includes a transmission, means for giving a time stamp to a parameter necessary for the mobile communication terminal to move to another cell and transmitting the parameter to the movement destination base station from the movement source base station, the movement destination base station includes a transmission means for transmitting difference information on parameter difference with the movement source base station to the mobile communication terminal together with the time stamp, as notification information, and the mobile communication terminal has a selecting means for comparing the time stamp of the difference information acquired from the movement destination base station and the time stamp of notification information acquired from the movement source base station, and selecting whether or not to perform a handover when the time stamps do not match.

A mobile communication terminal according to the present invention has a selecting means for comparing a time stamp of difference information acquired from a movement destination base station and a time stamp of notification information acquired from a movement source base station, and selecting whether or not to perform a handover when the time stamps do not march.

### The Effect of the Invention

In the present invention, in a communication terminal, by grasping whether the notification information was updated or not at the time of a handover, whether or not to carry out a handover can be selected, therefor a failure of a handover to occur can be prevented.

### BRIEF DESCRIPTION OF THE DRAWINGS

[FIG. 1] It is a system configuration example and a control flow chart according to the embodiments of the present invention.
[FIG. 2] It is a control table example of the latest Value Tag of a parameter of which a change has occurred.
[FIG. 3] It is a control table example of changed part history information an notification information for each Value Tag.
[FIG. 4] It is a flowchart which determines whether or not to carry out a handover by Value Tag.
[FIG. 5] It is a flowchart showing a process for eliminating a difference when the Value Tag is different.
[FIG. 6] It is a system configuration example according to a second embodiment of the present Invention.

### Best Modes for Carrying Out the Invention

### Mote for Carrying Out the Invention

### (A first embodiment)

Hereinafter, by referring to the drawings, an embodiment of the present invention will be described.

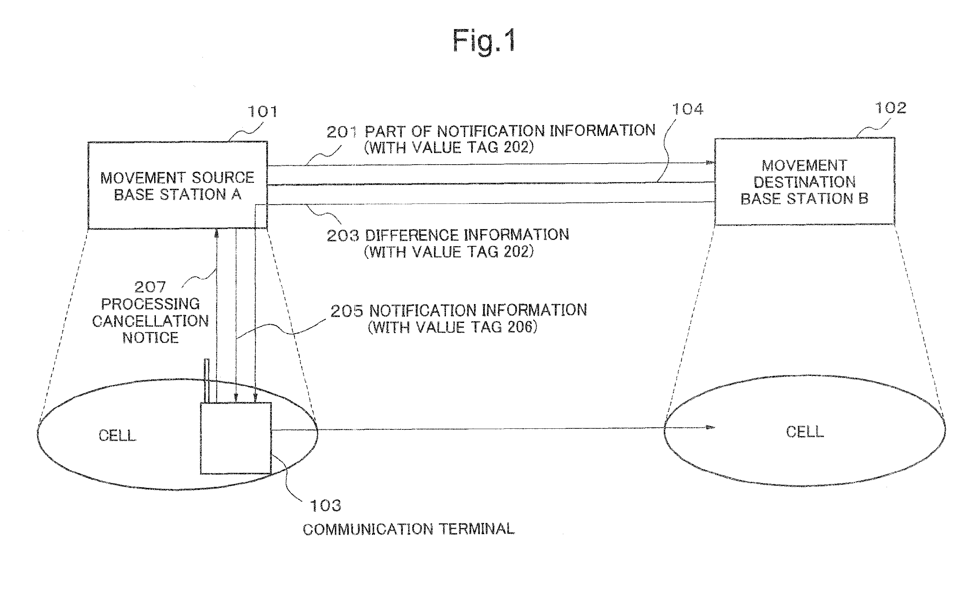

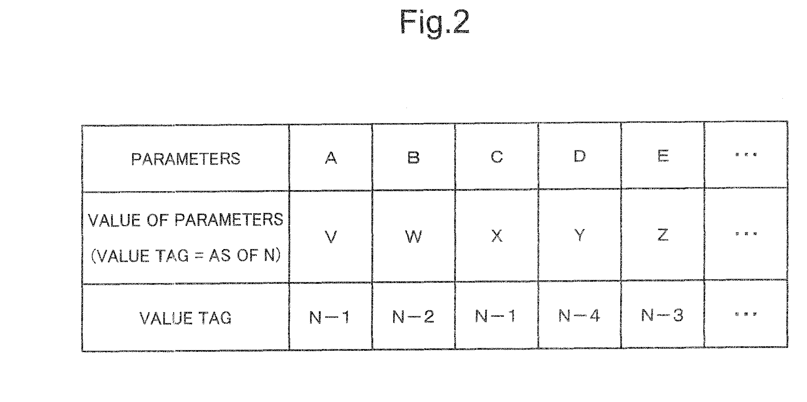

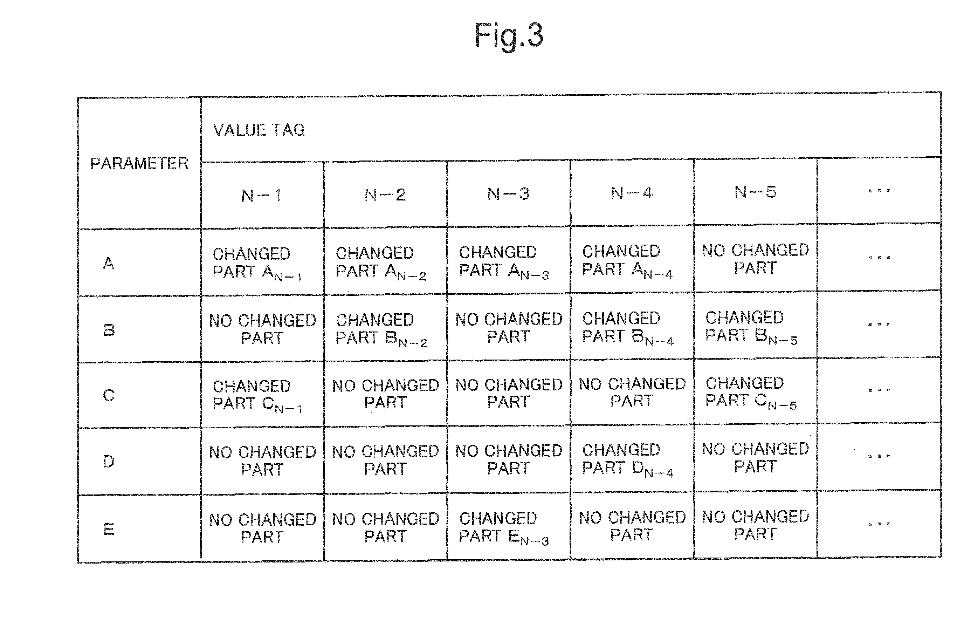

In FIG. 1, an exemplary configuration of a mobile communication system of one embodiment of the present invention is shown. A radio control system and a hanover system of LTE/3GPP indicated by non-patent document 1-4 are applied to the present system. The present system, includes a movement source base station A101, a movement destination base station, B102 and a mobile communication terminal (hereinafter simply referred to as a communication terminal) 103 which moves between cells of the base stations 101 and 102. X2 interface indicated in the non-patent documents 3 is used for interlace which connects between, two base station A101-B102, and transmission of information on a communication terminal at the time of a handover and transmission of user data are performed via the X2 interface. Further, in FIG. 2 and FIG. 3, control table example of parameters which the communication terminal 103 has is shown. FIG. 2 shows a control table example which has stored the value of parameters for each parameter and the latest Value Tag of a Value Tag which is a time stamp. FIG. 3 shows a control table example which has stored history information for the changed part (difference) of a parameter of notification information for each Value Tag.

At below, it is described using an example of which the communication terminal 103 located in the cell in the movement source baste station A101 moves to a cell in the movement destination base station B102 and a handover is carried out as having the movement destination base station B102 as a movement destination base station.

The movement source base station A101 which determined to start a handover using a transmission line it to the movement destination base station B102 transmits to the movement destination base station B102, a part of notification information 201 included in "Handover Reparation Information (handover preparation information)" in X2-AP: HANDOVER REQUEST which is handover request information, specified, in the non-patent documents 3. To the part of notification information, 201, parameter information, necessary for the communication terminal 103 to carry out a handover is included. Further, a Value Tag 202 which is a time stamp is included in parameters of the part of notification information 201 (Value Tag is given for each parameter). The Value Tag 202 hereof is a Value Tag corresponding to notification information being notified at the time when the movement source base station, A102 determined to start a. handover.

The movement destination base station B102 compares information on the part of notification information 201 and notification information which should be notified to the communication terminal 103 in order to male the communication terminal 103 to continue communicating in a movement destination cell. The movement destination base station B102, as a result of comparing, notifies the communication terminal 103 of the different part at a difference information 203 to a part of notification information, included in RRC: RRCConnection Reconfiguration (connection re-setting information) in X2-AP:HANDOVER REQUEST ACKNOWLEDGE which is handover request approval information specified in the non-patent documents 3. At the same time, the movement destination base station B102 notifies the communication terminal 103 of the Value Tag 202 received from the movement source base station A101. Further, while in FIG. 1, the difference information 203 is described as to be notified to the communication terminal 103 via the movement source base station A101, it may be directly notified via a radio link.

The communication terminal 103 always acquires a notification information 205 notified from the movement source base station A101 and a Value Tag 206 included in the notification information. The communication terminal 103, whenever receiving the notification information 205 corresponding to a different Value Tag, control the changed part of the notification information as history information. FIG. 2 shows a list of parameters which a change has occurred is the past in the notification information 205 received from the movement source base station A101, and a control table storing the latest Value Tag among the Value tags when a change in the parameter occurs. Further, to the control table of FIG. 2, notification information on the latest Value Tag 206 (as of Value Tag=N) is also held.

FIG. 3 is a control table storing a changed part of a parameter, for which a change has occurred in the past in the notification information 205 received from the movement source base station A101, for each Value Tag. Further, the changed part is indicating a changed, part from a value corresponding to a Value Tag received previously from a Value Tag which a change has occurred. For example, when the value received in Value Tag=N-4 is p, and the value held before receiving Value is is q, the changed part in N-4 is p-q.

The communication terminal 103 compares the Value Tag 202 received via the movement destination base station B102 and the latest Value Tag 206 received directly from the movement source base station A101, and when there is a difference in the received Value Tag 202 and the Value Tag 206, executes the following process.
(1) Selects whether a handover is canceled or carried out.
(2) When the cancel is selected, the movement source base station A101 is notified of the fact of cancellation by a processing cancellation notice 207. The communication terminal 103, by canceling a handover, can prevent an occurrence of a failure of a handover due to a parameter being different. In a relatively simple system by cancelling handover processing at this stage, there is a merit to prevent a malfunction of a system. In this case, hanover operation may be repeated from the beginning until the above-mentioned comparison result watches. Further, when wanting to continue a handover from this state, the communication terminal 103, in order to match parameters, executes processing of (3) or later,
(3) A parameters which was not received from the movement destination base station B102 and a parameter for which a change has occurred, in other words among the Value Tags stored in the control table (FIG. 2) of the latest Value Tag, a parameters of the last received Value Tag 202 or later from the movement destination base station B 102, are extracted. For example, when the Value Tag 202 last received from the movement destination base station B102 is N-2, parameters A, B, and C with any changed parts are relevant.
(4) At the communication terminal 103, to the parameters extracted at (3), for each parameters, the changed part (the changed part shown in FIG. 3) occurred by the time the movement destination base station B102 received the Value Tag 202 is added to the notification information 205 (FIG. 2) held at the time (as of Value Tag=N: as of the latest) when the communication terminal 103 received the difference information 203 of notification information. By this calculation, the value of the notification information 205 transmitted by the movement source base station A101 at the time when receiving the Value Tag 202, is calculated. As an example, the actual value of parameter A as of Value Tag=N-2, is calculated as follows. That is, to the factual value (V) of the notification information 205 (FIG. 2) held at the time of receiving the difference information. 203 of notification information (Value Tag=N), changed part AN-2 and changed part AN-1 to Value Tag=N-2 are added. To a part with no changed part, 0 is added.
(5) As difference information to a part of the notification information, to a parameter for which the difference information 203 have been received from the movement destination base station B102, a parameters calculated at (4) is sent.
(6) A parameter which is not relevant to (3), that is, to a parameter for which a change has not occurred, a parameter which is already held at the terminal is set.

By performing the above-mentioned procedures, the communication terminal 103, when the notification information is updated after the movement source base station transmitted a part of information on the notification information to the movement destination base station, can select whether to cancel or to carry out a handover in the terminal. The communication terminal 103 operates as follows when a handover is carried out. That is, the difference that occurs by the difference information to a part of the notification information notified to the terminal from the movement destination base station and the notification information acquired after updating from the movement source base station is eliminated and set. As a result, it is possible to prevent a failure or a handover.

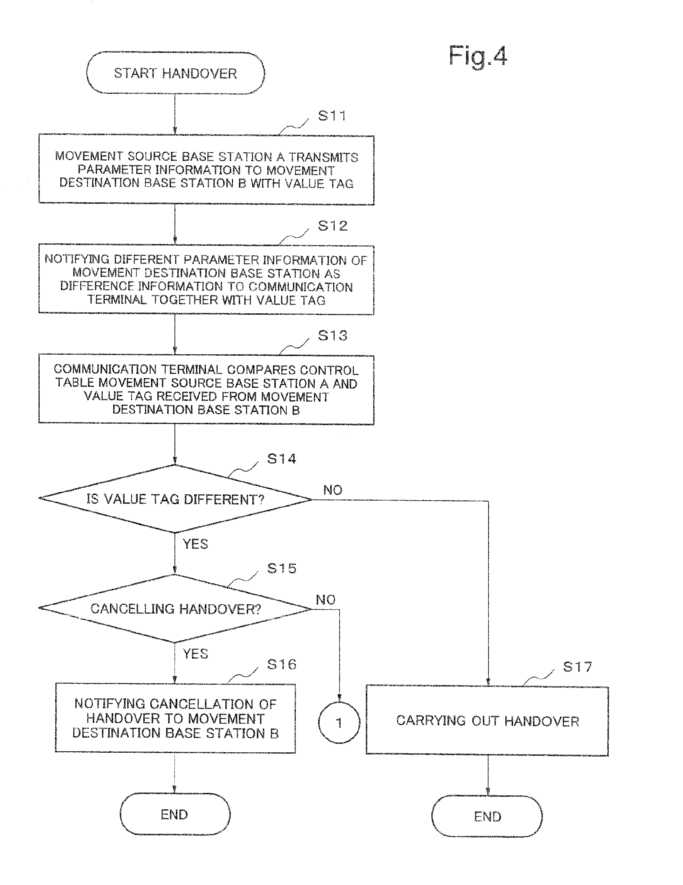

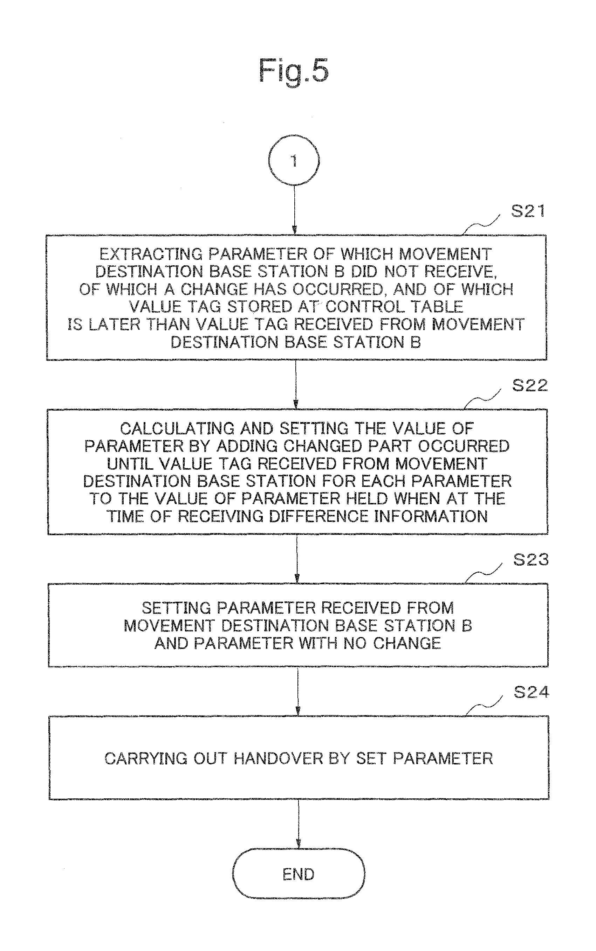

In FIG. 4 and FIG. 5, a setup steps of the above-mentioned parameters is shown as a flowchart. FIG. 4 indicates an example in which the notification information notifies from a movement source base station A and a Value Tag of parameter information in the notification information notified from a movement destination base station are compared, and a handover is canceled when they are different. Steps S11-S14 indicate process until just before the above-mentioned (1) which compares a movement source base station and a part of Value Tag of the notification information received from a movement destination base station. S15 indicates processing of the above-mentioned (1) which judges whether to cancel or to carry out a handover. S16 indicates the above-mentioned processing of (2) which cancels a handover when a comparison result does not match. FIG. 5 corresponds to S17 of FIG. 4, and indicates s operation of executing a handover of (3)-(6) by setting a parameters by adding a difference of a parameter when the Value Tags do not match.

As has been described above, according to the present embodiment, when the notification information is updated after a movement source base station transmitted parameter information necessary for a handover to a movement destination base station by a part of notification information, whether to cancel or to carry out a handover can be selected in a. terminal. Further, when a handover is carried out, the difference that occurs by the difference information to a part of the notification information notified to a communication terminal from a movement destination base station and the notification information after updating acquired from a movement source base station is eliminated and set. As a result, it will bye possible to prevent a failure of a handover.

White the above-mentioned description has been described by an example of giving a Value Tag for each parameter and transmitting, it is equivalent to give one Value Tag corresponding to a parameter group and to transmit. In this case, when a parameters is transmitted from a movement source base station to a movement destination station, and to a communication terminal, notification information is transmitted by giving one Value Tag for each transmission opportunity of a parameter. In a communication terminal, in the control table shown in FIG. 2, by controlling a Value Tag for which a change has occurred for each parameter, by performing addition or subtraction processing on a parameter for which a change has occurred, the latest parameter value may be calculated. Processing can be simplified by performing comparison processing of a plurality of parameters by the group unit.

### (A second embodiment)

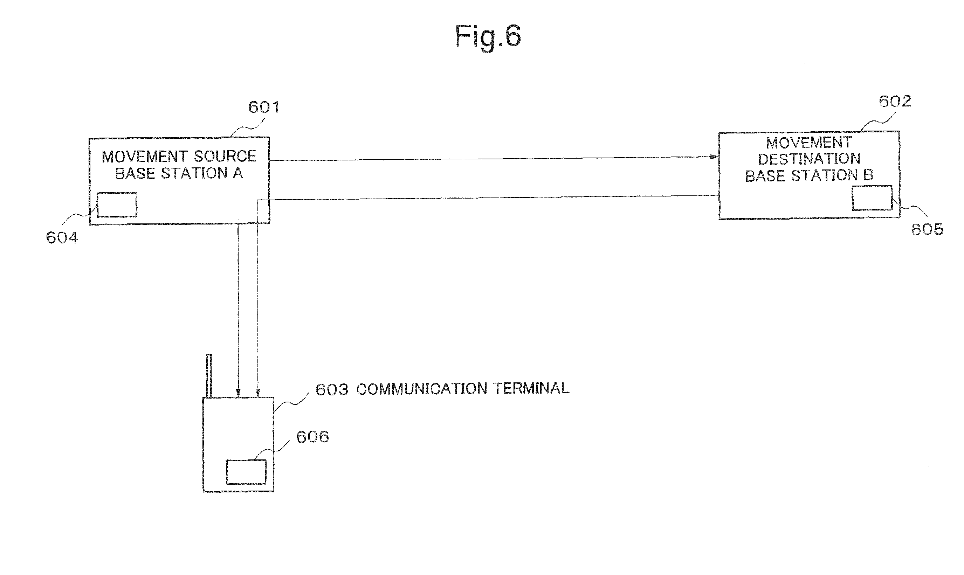

Next, a second embodiment of the present invention will be described with reference to FIG. 6.

In FIG. 6, a composition of a mobile communications system of the second embodiment is shown.

In FIG. 6, a movement source base station 601 has a transmission means 604 for giving a time stamp to a parameter necessary for a communication terminal 603 to move to another cell and transmitting the parameter to a movement destination base station 602 from the the movement source base station 601. The above-mentioned movement destination base station 602 has a transmission means 605 for transmitting difference information with the movement source base station 601 of the above-mentioned parameters to the above-mentioned communication terminal 603 together with the above-mentioned time stamp as notification information. The above-mentioned communication terminal 603 compares the time stamp of difference information acquired from the above-mentioned movement destination base station 602 and the time stamp of notification information acquired from the movement source base station 601. The communication terminal 603 includes a selecting means 606, which selects whether or not to perform a handover when the comparison indicates that time stamps do not match.

According to the second embodiment, when notification information is updates after the movement source base station 601 transmits a part of information of notification information to the movement destination station 602, whether to cancel or to carry out a handover can be, selected at the mobile communication terminal l 603. As a result, it will be possible to prevent a failure of a handover by performing a handover in the state that parameters do not match.

### (A third embodiment)

A third embodiment, or the present invention its a handover control method, of a mobile communication system. In the handover control method, hereof a time stamp for each parameter necessary for a mobile communication terminal to move to another cell is given, or one time stamp corresponding to a parameter group is given, and the parameter or the parameter group is transmitted to a movement destination base station from a movement source base station. Afterwards, the movement destination base station transmits difference information with the movement source base station of a parameters to a mobile communication terminal together with a time stamp as notification information. The mobile communication terminal compares the time stamp of difference information acquired from the movement destination base station and the time stamp of notification information acquired from the movement source base station, and selects whether or not to perform a handover when the time stamps do not match.

### (A. fourth embodiment)

A. fourth embodiment of the present invention is related two a mobile communications system. The mobile communication system, has a base station and a mobile communication terminal, and the mobile communication terminal includes a means to move to another cell which a base station composes and executes a handover. A movement source station gives a time stamp to each parameters necessary for a mobile communication terminal to move to another cell or givers one time stamp corresponding to a parameter group. The movement source base station has a means to transmit the given time stamp to a movement destination base station from the movement source base station. The movement destination base station, has a means to transmit difference information with the movement scarce base station of a parameter to the mobile communication terminal together with a time stamp as notification information. The mobile communication terminal compares the time stamp of difference information acquired from the movement destination base station and the time stamp of notification information acquired from the movement source base station. The mobile communication terminal has a means to select whether or not to perform a handover when a compared time stamps do not match.

### (A fifth embodiment)

A fifth embodiment, of the present invention relates to a mobile communication terminal and includes a base station and a mobile communication terminal, wherein the mobile communication terminal has a means to execute a handover by moving to another cell which the base station composes. The movement source base station has a means to give a time stamp to each parameter necessary for the mobile communication terminal to move to another cell or to give one time stamp corresponding to a parameter group to transmit the parameter or the parameter group to the movement destination base station from the movement source base station. The movement destination base station has a means to transmit difference information with the movement source base station of the above-mentioned parameter to the above-mentioned mobile communication terminal together with a time stamp as notification information. The mobile communication terminal is a mobile communication terminal applied to a mobile communications system equipped with the above-mentioned means. The mobile communication terminal further includes a means to compare a time stamp of difference information acquired from the movement destination base station and a time stamp of notification information acquired from the movement source base station, and to select whether or not to perform a handover when the time stamps do not match.

While the invention has been particularity shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Further, the function of the communication terminal carrying out the above-mentioned handover can be realizes by installing a program to an information processing device.

This application is based upon and claims the benefit of priority from Japanese patent application No. 2009-108007, filed on April 27, 2009, the disclosure of which is incorporated herein in its entirety by reference.

### Industrial Applicability

The present invention relates to a handover control method, a mobile communications system, and a. mobile communication terminal and has the applicability on the industry.

### Description of the Codas

- 101: movement source base station A
- 102: movement destination base station B
- 103: communication terminal
- 104: transmission line
- 201: a part of notification information
- 205: notification information
- 202 and 206: Value Tag
- 203: difference information
- 207: handover processing cancellation notice

## Claims

1. A handover control method of a mobile communication system, **characterized by**:
giving a time stamp to a parameter necessary for a mobile communication terminal to move to another cell and transmitting the parameter to a movement destination base station from a movement source base station; wherein
the movement destination base station transmits difference information with the movement source base station of the parameter to the mobile communication terminal together with the time stamp as notification information; and
the mobile communication terminal compares the time stamp of the difference information acquired from the movement destination base station and the time stamp of notification information acquired from the movement source base station, and selects whether or not to perform a handover when the time stamps do not match.

2. The handover control method according to claims 1, **characterized in that**;
said mobile communication terminal compares a parameter in the notification information, and the latest said time stamp, and detects a change of said parameter.

3. The hanover control method according to claims 1 or 2, **characterized in that**;
said mobile communication terminal calculates the value of the parameter being changed by adding said difference information to a parameter from the latest said time stamp received from movement destination base station when carrying out a handover.

4. The handover control method according to any one of claims 1-3, **characterized in that**;
said time stamp is a Value Tag given to a parameter necessary for carrying out a handover which is notifies two said movement destination base station from said movement source base station.

5. The handover control method according to any one of claims 1-4, wherein said parameter is a parameter group.

6. A mobile communication system, **characterized by** comprising:
a movement source base station, a movement destination base station, and a mobile communication terminal carrying out a handover; wherein
the movement source base station has a transmission means for giving a time stamp to a parameter necessary for a mobile communication terminal to move to another cell and transmitting the parameter to a movement destination base station from a movement source base station;
the movement destination base station has a transmission means for transmitting difference information with the movement source base station of the parameter to the mobile communication terminal together with the time stamp as notification information; and
the mobile communication terminal has a selecting means for comparing the time stamp of the difference information acquired from the movement destination base station and the time stamp of notification information acquired from the movement source base station, and selects whether or not to perform a handover when the time stamps do not match.

7. The mobile communication system, according to claims 6, wherein;
said mobile communication terminal comprises a storage means in which information on the latest said time stamp of a parameter in the notification information is stored; and wherein
the mobile communication system detects a change in said parameter by referring to the storage means.

8. The mobile communication system according to claim 6 or 7, wherein
said mobile communication terminal calculate the value of the parameter being changed by adding said difference information to a parameter from the latest said time stamp received from said movement destination base station when carrying out a handover.

9. The mobile communication system according to any one of claims 6-8, **characterized in that**;
said time stamp is a Value Tag given to a parameter necessary for carrying out a handover which is notified to said movement destination base station from said movement source base station.

10. The mobile communication system according to any one of claims 6-9, wherein said parameter is a parameter group.

11. A mobile communication terminal, **characterized by** comprising:
a selecting means for comparing a time stamp of difference information acquired from a movement destination base station and a time stamp of notification information acquired from a movement source base station, and selecting whether or not to perform a hanover when time stamps do not match.

12. The mobile communication terminal according to claim 11, wherein a change of said parameter is detected by comparing a parameter in notification information and the latest said time stamp.

13. The mobile communication terminal according to claim 11 or 12, wherein the value of the parameter being changed is calculated by adding said difference information to a parameter from the latest said time stamp received from said movement destination base station when a handover is carried out.

14. The mobile communication terminal according to any one of claims 11-13, wherein
said parameter is a parameter group.
